# EUROPEAN PATENT SPECIFICATION

(11) **EP 2 674 312 B1**
(45) Date of publication and mention of the grant of the patent: **03.05.2017**
(21) Application number: 12171663.3
(22) Date of filing: 12.06.2012
(51) Int. Cl.: B60J 7/057, B60J 7/00, B60J 7/04, B60J 7/043, B60J 7/047

(54) **Openable roof system for a vehicle**
Öffnungsfähiges Dachsystem für ein Fahrzeug
Système de toit ouvrant pour véhicule

(43) Date of publication of application: 18.12.2013
(73) Proprietor: Inalfa Roof Systems Group B.V., 5804 AB Venray (NL)
(72) Inventor: Nellen, Marcel Johan Christiaan, 5815 AR MERSELO (NL); Manders, Peter Christiaan Leonardus Johannes, 5961 GN Horst (NL)
(74) Representative: De Vries & Metman

(56) References cited:
- DE-A1- 10 327 352
- FR-A1- 2 926 496
- FR-A1- 2 926 497
- US-A1- 2012 139 284

## Description

The invention relates to an open roof system for a vehicle having an opening in its fixed roof, comprising a stationary part to be fixed to the roof, at least first and second movable elements, which are each movable between a position in which it is retracted, and a position in which it is deployed, a motor for driving the movable elements at least partly between the two positions, and at least two drive cable assemblies for transferring the torque of the motor to said movable elements, whereby the stationary part comprises at least first and second guiding channels and laterally positioned guides for respectively guiding the drive cable assemblies and the movable elements whereby the drive cable assemblies comprise a flexible first part having first and second ends, said first part being driven by the motor, and whereby said first end of said flexible first part is connected to the first movable element, in a first direction, and said second end is guided in a first guiding channel in the lateral guide, said second end oriented in a direction substantially parallel to the first end towards said first movable element.

Such open roof system is for example known from FR 2926497 B1. This document discloses a sunscreen device as part of an open roof system, comprising two oppositely moving windable screens, which are operated by one motor unit, which is positioned, seen in a longitudinal direction, between the windable screens. Two drive cables operate two front members of the windable screens, whereby both ends of the drive cables are used to operate one lateral side of each of the two front members of the windable screens. The drive cables are very long and guided in channels, routed from a first lateral side of the sunscreen device, to an opposite second lateral side of the sunscreen device, and via a rear end channel, back to the first lateral side of the sunscreen device.

It is an object of the present invention to improve such an open roof system.

To obtain this object there is proposed an open roof system according to the features of claim 1.

By having an elongated second part connected to the first part of the drive cable assembly at its second end it becomes possible to use the movement of the first part of the drive cable assembly and drive a second movable element in a direction opposite to first movable element, while keeping the elongated second part in the same lateral guide as the second end of the first part of the drive cable assembly. This is favorable in view of the length of the drive cable, not only because of costs and necessary room, but also because of cable resistance, and cable slack, being less.

In the embodiment of the invention where the second part is continuously immovably connected to the flexible part, the elongated second part of the drive cable assembly can be separate from the first part of the drive cable assembly. In such embodiment the first and second parts may be connected by a separate connecting part.

In the other embodiment of the invention a second part is temporarily connected to the flexible first part, by a temporary connecting part. This is necessary when the first and second movable elements do not require the same amount of cable movement for their respective function, so that during a movement between two positions of the first or the second movable element, the second elongated part is disconnected from the flexible first part, such that the second movable element, which requires the least of the cable travel, stops moving.

In the embodiment of the invention where the second part is continuously immovably connected to the flexible part, the elongated second part of the drive cable assembly is an extension of the flexible first part. This is when one and the same drive cable forms the first and the second part of the drive cable assembly. In such situation the elongated second part is delimited from the first part by a bend with a small radius in the drive cable assembly. In practice the boundary area between the first and the second part of the drive cable assembly shall be slightly flattened, due to the bend in the cable. This flattened area is necessary to let it protrude through a lateral opening in the guiding channels through which the first and second part of the drive cable assembly run.

In another embodiment the elongated second part is a flexible part having the same properties as the flexible first part.

However, in yet another embodiment the elongated second part may have different properties compared to the flexible first part for instance the second part may be a substantially stiff part, made of plastic material or metal alloy, or the like.

In one embodiment the first and second guiding channels in the lateral guide have lateral openings extending along the length of the guide whereby the lateral openings are facing each other, and wherein the connecting part projects through said openings. It could be conceived in another embodiment that either one of the first, and second part projects through said openings. In another embodiment it could also be conceived that the temporary connecting part projects through said openings.

In another embodiment the first and second guiding channel in the lateral guide have lateral openings extending along the length of the guide, whereby the lateral openings are facing away from each other, and wherein the connecting part projects through said openings.

In a preferred embodiment the first and second movable elements are windable sunscreens, and wherein the motor is positioned substantially between the first and the second movable elements.

It is also conceivable that the first and second movable elements are stackable sunscreens, or closure means for closing of the opening in the fixed roof of the panel.

In another embodiment, the first and second movable elements are the closure means and a slide. For instance a slide for raising a wind deflector means for deflecting the wind when the closure means is in the open position.

In yet another embodiment the elongated second part is part of a mechanism for the movement of the first or second movable element.

In either of the embodiments described above the first part of the drive cable assembly runs from one lateral guide to the opposite lateral guide, via the first guiding channel.

The invention will hereafter be elucidated with reference to the drawings showing embodiments of the invention by way of example.
Fig. 1 is a schematic perspective view of a passenger car which is provided with an embodiment of the open roof system according to the invention.
Fig. 2 is an enlarged schematic perspective view of the open roof system according to the invention used in the car of Fig. 1.
Fig. 3 is a schematic perspective exploded view of the open roof system of Fig. 2.
Fig. 4 is a plan view of the open roof system according to Fig. 3, whereby the closure means of the open roof system is not shown for clarity reasons.
Fig. 5b is a schematic perspective view through the connecting part in one embodiment, which is part of the drive cable assembly.

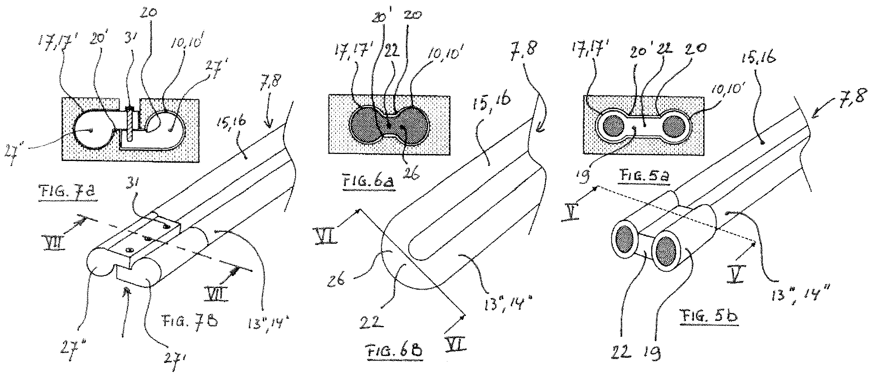

Fig. 5a is a cross section taken along line V-V in Fig. 5b through the connecting part, and showing guiding channels with lateral openings facing each other.
Fig. 6a is a cross section taken along line VI-VI in Fig. 6b through the connecting part, and showing guiding channels with lateral openings facing each other.
Fig. 6b is a schematic perspective view showing the drive cable assembly, whereby the first and the second part of the assembly is a continuous cable having an acute angle.
Fig. 7a is a cross section taken in Fig. 5B along line VII-VII through the connecting part.
Fig. 7b is a schematic perspective view, showing the connecting part in an embodiment, in which it is built up of two mirror image pieces.

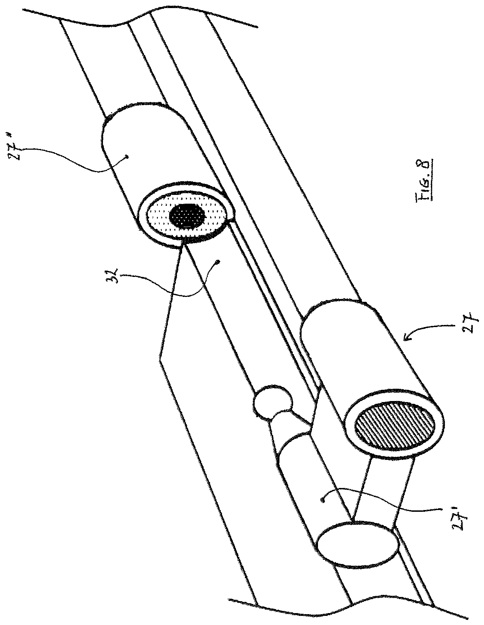

Fig. 8 is an enlarged schematic perspective view of the temporary connecting part, shown in a disconnected position.

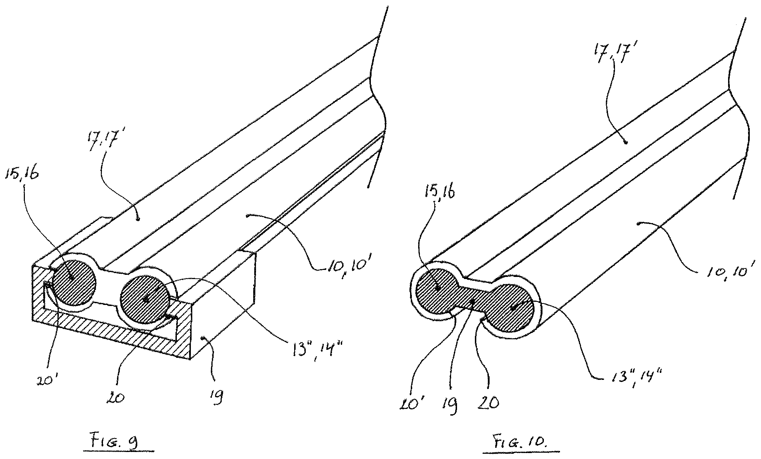

Fig. 9 is a schematic perspective view, starting from a perspective cross section at the front of the drawing, showing two guiding channels, having lateral openings facing away from each other.
Fig. 10 is a schematic perspective view showing guiding channels having joined lateral openings facing a downward direction.

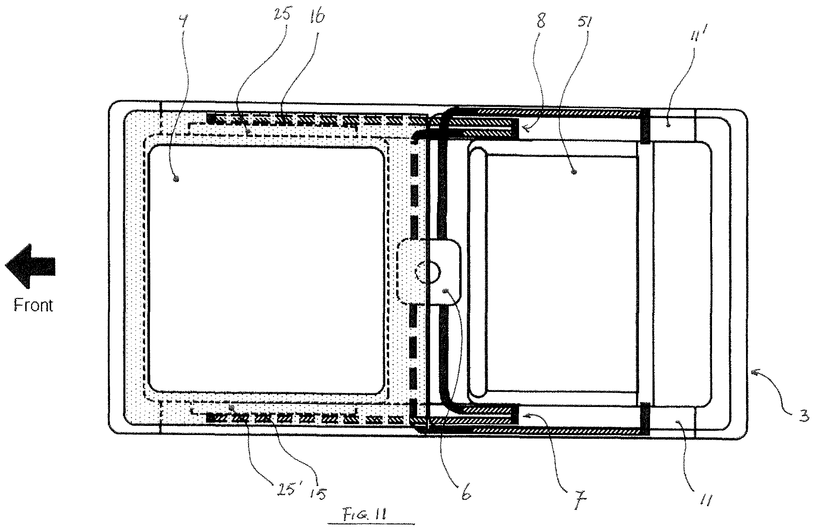

Fig. 11 is a schematic plan view of the open roof system showing, front and rear glass panels, of which only the rear panel is drawn as being transparent, in order to show the windable or rollo screen, guiding channels and drive cable assemblies, lying below the transparent rear panel.

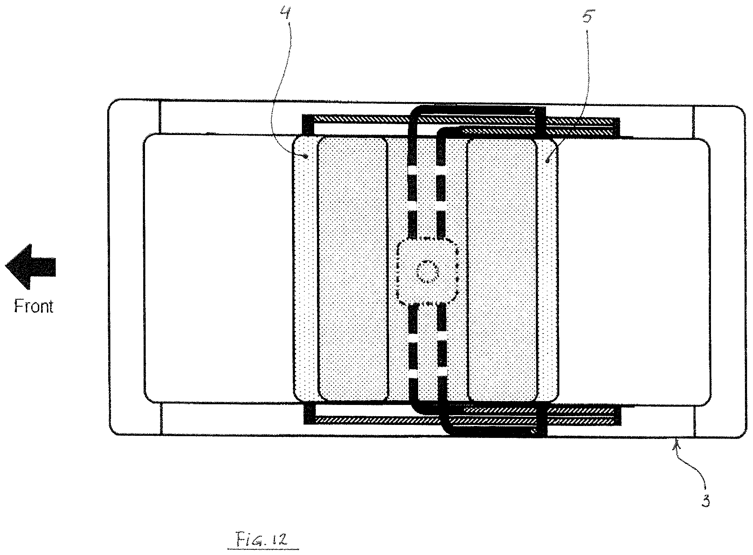

Fig. 12 is a schematic plan view of the open roof system, showing the front and rear glass panels in a centrally stacked position.

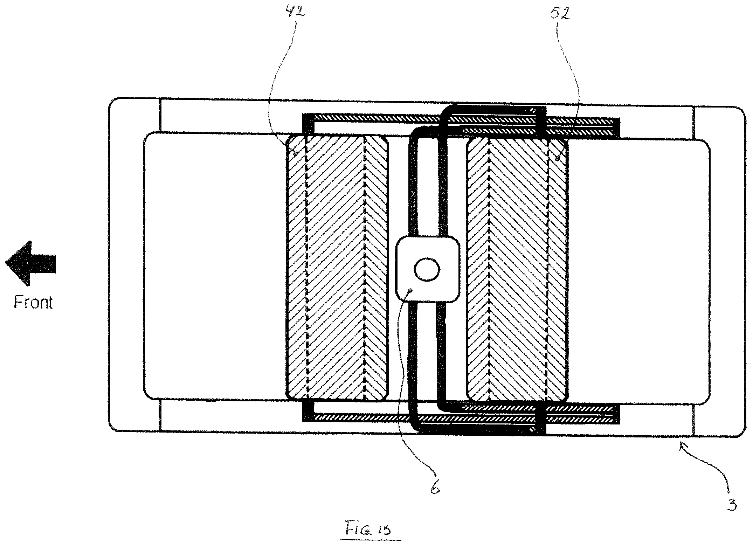

Fig. 13 is a schematic plan view of the open roof system, showing the front and rear sunshade panels in a centrally stacked position.

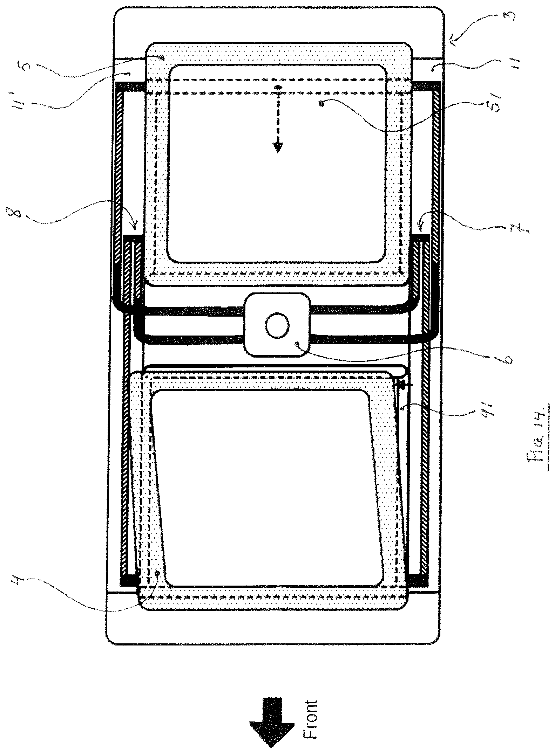

Fig. 14 is a schematic plan view of the open roof system showing the front and rear closure means panels, and the front and rear windable screens. The front panel is drawn in a tilted position and the rear windable screen is drawn in a partly open position.

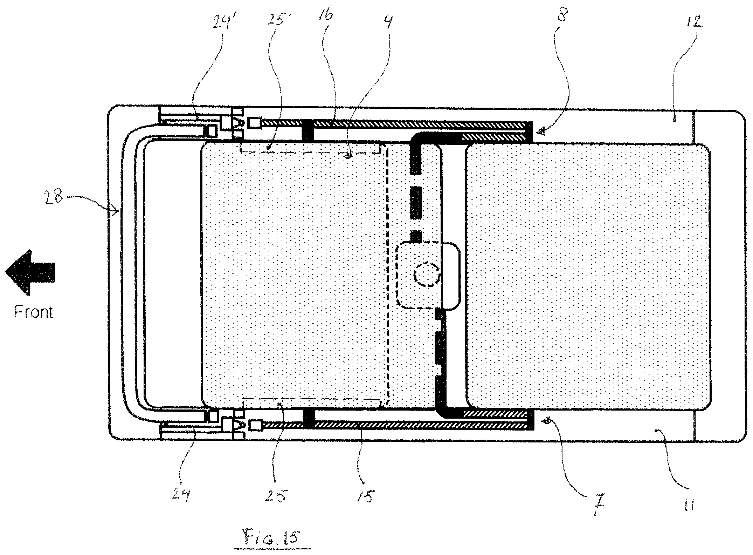

Fig. 15 is a schematic plan view of the open roof system showing the front and rear glass panels, and the wind deflector device having slides. The front panel is drawn in a slightly open position, whereas the drive cable assemblies are drawn in a disconnected position from the wind deflector slide.

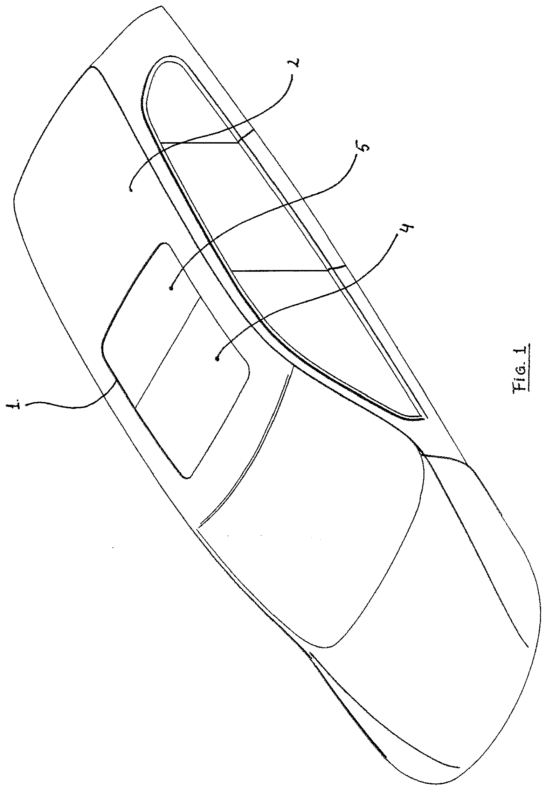

Referring to Fig. 1, a vehicle having an open roof system in its fixed roof 2 is illustrated schematically. Said open roof system comprises a roof opening 1 in a fixed roof 2 of the vehicle, such as a passenger car, and at least first and second closure means 4, 5 for example glass or plastic, at least partly transparent panels as shown in Fig. 1. The first and second closure means can be moved for closing and at least partially opening said roof opening 1 by means explained below.

Below the roof opening 1, not shown in Fig. 1, but elucidated hereafter, at least first and second movable elements 41, 51, 42, 52, 24 are arranged, here in the form of windable (flexible) sunscreens or rollo's, stackable (rigid) sunscreens or slides for wind deflector means, which are each movable between a position in which it is retracted, and a position in which it is deployed. Other first and second movable elements are conceivable.

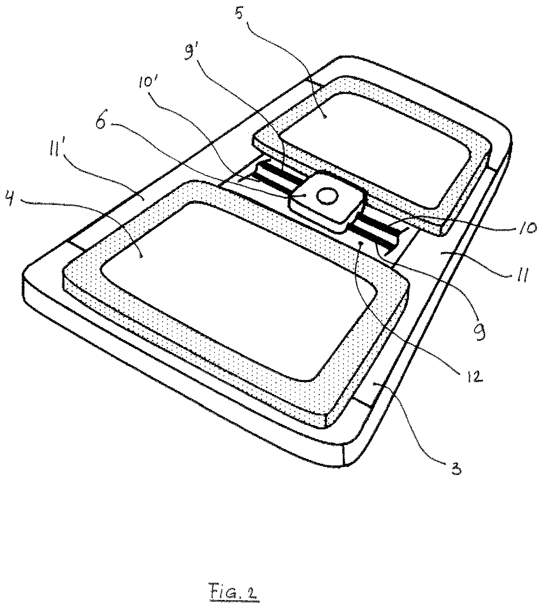

Referring to Fig. 2, an open roof system is schematically illustrated, comprising the first and second movable elements 4, 5, here closure means, connected via a moving mechanism (not shown here), which is known per se, to a stationary part 3, particularly a frame, and further comprising a motor 6 and partly shown first guiding channels 9, 9', 10, 10'. The stationary part 3 comprises front and rear members and a center member 12, which are known per se, and not further elucidated and are connected to lateral extrusion guides 11, 11', and said stationary part 3 connects the open roof system with the body of the vehicle by means of the usual fixing concepts such as screwing, gluing or a combination of these fixing concepts. The motor 6 may be an electric motor with a gearwheel that transfers the motor torque to the movable elements 4, 5, 24, 41, 51, 42, 52, via the drive cable assemblies 7, 8, in a way known per se. In Fig. 2 the motor 6 is positioned on the center member, but it is conceivable that the motor is positioned on the front or rear member of stationary part 3.

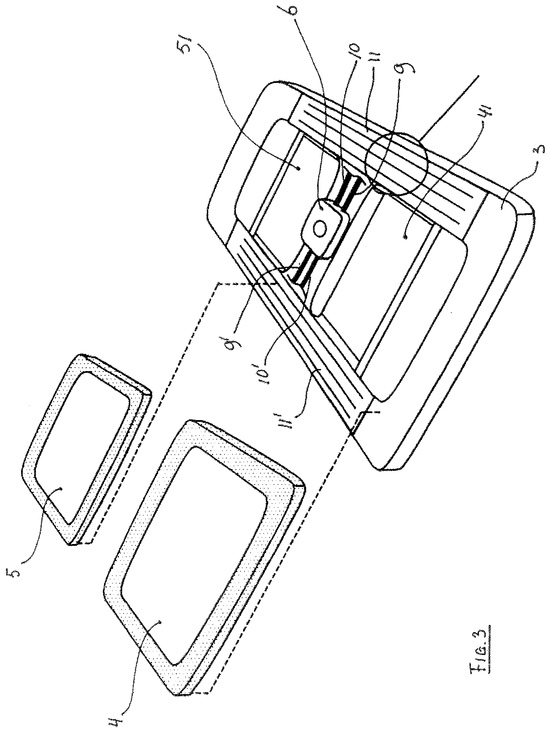

Referring to Fig. 3, an open roof system is illustrated schematically and partly in exploded view, such that the stationary part 3 and the first and second movable elements 41, 51, here windable sunscreens, are shown. The first and second movable elements 41, 51 are drawn in a partly deployed position. Each of these windable sunscreens comprise a flexible screen, said screen being connected on one longitudinal end to a winding shaft, and on its opposite longitudinal end to a movable control beam. Said screen can be wound up onto, or unwound from the rotatable winding shaft in order to respectively deploy or retract the sunscreen. The winding shafts of each of said movable elements 41, 51 are fixed to the stationary part 3, and are positioned, seen in a longitudinal direction, adjacent to the motor 6. Said motor 6 is positioned on the center member 12 of stationary part 3, such that each of the movable elements 41, 51 can be deployed and or retracted in an opposite longitudinal direction.

The stationary part 3 comprises lateral extrusion guides 11, 11'. Said lateral guides 11, 11' comprise supporting channels for guiding the first and second movable elements 4, 5, 41, 51, 42, 52, 24, but said guides comprise also first and second guiding channels 9, 9', 10, 10', 17, 17' for guiding the drive cable assemblies 7, 8, and movable elements 4, 5, 24, 41, 51, 42, 52, said first and second guiding channels are oriented substantially parallel to each other.

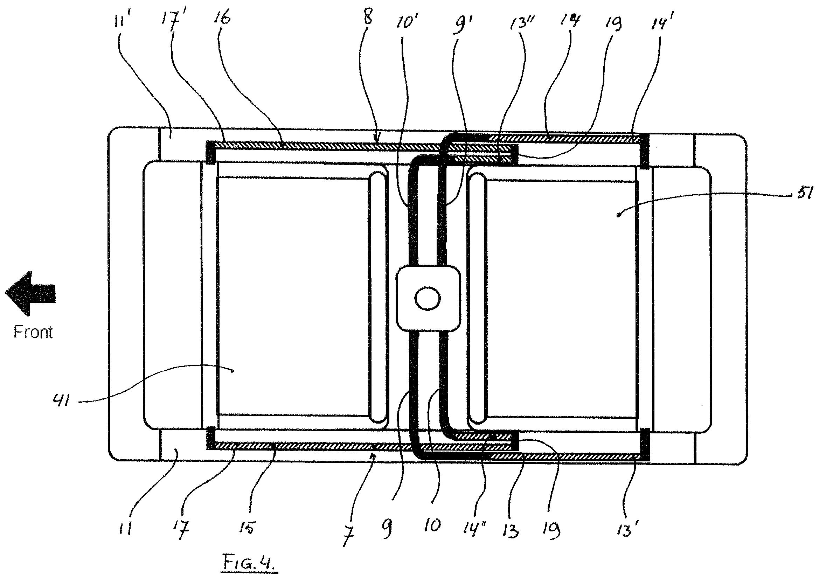

Fig. 4 shows only part of the open roof system, namely the stationary part 3, the first and second moveable members 41, 51, drawn in a partly deployed position, the motor 6, first and second guiding channels 9, 9', 10, 10', 17, 18, and schematically, shown by hatching in the drawing, part of the drive cable assemblies 7, 8, running in guiding channels 9, 9', 10, 10', 17, 17'. The first guiding channels 9, 9', 10, 10' guide the drive cable assemblies 7, 8 to and from the motor 6, said channels can be conceived as being steel pipes or channels incorporated in either of the front, center or rear members in a manner known per se, running from the motor to a connecting joint with the first channel, in the lateral guide 11, 11'.

Drive cable assembly 7, 8 comprises flexible first parts 13, 14, having first ends 13', 14', and second ends 13", 14", and further second parts 15, 16 and a connecting part 19.

Each of the first parts 13, 14 of the drive cable assemblies is guided in the first guiding channels 9, 9'. Said first parts 13, 14 run from the position at which the gearwheel of the motor 6 is in driving engagement with the first part of the drive cable assembly 7, 8in one direction through the first guiding channels 9, 9'. Via a connection joint they run from the first channels 9, 9' into the respective lateral guide, and along a lateral guiding channel, up to where the first parts 13, 14 are connected with their first ends 13', 14' to the connecting part 19 of the first or second movable element 41, 51.

Each of the first parts 13, 14 runs in opposite direction from the first end 13', 14', from the position at which the gearwheel of the motor 6 is in engagement with the drive cable assembly, through the first guiding channels 10, 10'. Via a connection joint they run from the channels 10, 10' into the respective lateral guide, and along a lateral guiding channel, up to where the first parts 13, 14 are connected with their second ends 13", 14" to the connecting part 19.

The second parts 15, 16 of drive cable assembly 7, 8 are connected to the first parts 13, 14 by means of the connecting part 19, and said second parts 15, 16 run in second guiding channels 17, 17' in lateral guides 11, 11' from said connecting part 19 to a connecting part of the first or second movable element at an opposite end. Second parts 15, 16 may be a substantially stiff part, for example made of plastic material or a metal alloy.

When in Fig. 4 the motor 6 runs in clockwise direction, first and second movable elements 41, 51 will be retracted, that is the windable sunscreen cloth will be wound up onto the respective winding shafts. This can be explained as follows. First parts 13, 14 of drive cable assemblies 7, 8, which are connected with their first ends 13', 14' to the movable control beam of the second moveable element 51, are driven by the clockwise turning motor in a direction such that the movable beam slides towards the winding shaft of movable element 51, and thus retracting the movable element 51.

Because second ends 13", 14" are positioned at the opposite end of first parts 13, 14, and also at the opposite side of motor 6, this end will move in longitudinal opposite, but substantial parallel direction compared to its first end 13', 14', and towards the first movable element 4, 24, 41, 42.

Second parts 15, 16 of drive cable assembly 7, 8 are connected to the second ends 13", 14" of first parts 13, 14, so that second parts move in the same direction as said second ends 13", 14", and said second parts 15, 16 are guided in a second guiding channel 17, 18 in a second direction towards the second movable element 5, 51, 52, and connected thereto. Thus, said second parts will move in a longitudinal direction opposite to the first parts when motor 6 runs in a clockwise direction. The movable beam slides towards the winding shaft of movable element 41, and thus retracting the movable element 41. So by connecting the first parts 13, 14 to the second parts 15, 16 drive cable assemblies 7, 8 are created with which the two movable elements 41, 51 are driven in opposite direction by means of one motor.

Referring to Fig. 5a and 5b, the elongated second part 15, 16 of the drive cable assembly 7, 8 is separate from the first part 13, 14 , and the connecting part 19 of drive cable assemblies 7, 8 is illustrated in a schematic way, as a separate part. First and second guiding channels 9, 9', 10, 10' have lateral openings 20, 20', along the length of the guide which openings allow the connection part 19 to protrude from the first into the second guiding channel. Second ends 13", 14" of first parts 13, 14 of drive cable assemblies 7, 8 are firmly and immovably connected to second parts 15, 16 by means of this connecting part 19. Said connecting part 19 could for instance be made of a plastic molded part, or a metallic molded or casted part. The shape of the connecting part 19 is such that it has a narrow portion 22 in between the drive cable first and second parts 13", 14", 15, 16. This narrow portion 22 is necessary, to make the lateral openings 20, 20' small enough, so that when a driving force is applied to said drive cable assemblies 7, 8, the drive cables do not escape from their respective channels through the respective lateral openings 20, 20', at an area away from the connecting part 19. In this embodiment the lateral openings 20, 20' in the first and second guiding channels are facing each other. The length of the openings 20 is such that they allow movement of the connecting part 19 over a distance sufficient to allow movement of the movable elements 41, 51 between their retracted and deployed positions.

Referring to Fig. 6a and 6b, another embodiment of the drive cable assemblies is schematically shown. In this embodiment the drive cable assemblies may also be made of just one cable, whereby the elongated second part is an extension of the flexible first part. Instead of a separate connecting part 19, connecting two separate drive cables, the first and second drive cable parts 13, 14, 15, 16 could be made of one piece of cable having a bend 26 with a small radius (here through 180 degrees) at the position where the cable is routed from the first guiding channel 9, 10, to the second guiding channel 17, 18. At this particular bend 26, the transition of the cable thickness must have a similar narrow portion 22, which protrudes through lateral openings 20, 20', such that the drive cable cannot escape through lateral openings 20, 20' in the first and second guiding channels 9, 9', 10, 10', 17, 18, and said channels can give enough support for guiding the cable assemblies 7, 8 as explained above. In this embodiment the elongated second part 15, 16 may be a flexible part having the same properties as the flexible first part. The lateral openings 20, 20' are facing each other.

Fig. 7a and 7b refer to yet another embodiment of connecting first and second parts 13, 14, 15, 16 of the drive cable assemblies 7, 8. Here the connecting part 19 is split up in two parts, each of which are connected with a separate element, which could be a screw or equivalent. Such embodiment could be used in a situation where the complete drive cable assembly is difficult to assemble into first and second guiding channels. In this embodiment the first and second part of the cable can be assembled in sequence, and afterwards these two parts can be connected to each other by means of the separate fixing element 31.

Fig. 8 is referring to another special embodiment of the connecting part 19. As explained before, the first and second movable elements are driven by one motor 6. It is clear that when the length of movement of the drive cable assembly that drives the first movable element 4, 41, 42, 24 from a first extreme position to another extreme position is not the same as the length of movement required for the second movable element 5, 51, 52, it is not possible to finalize the movement of one of the movable elements, when the movement of the other element is completed. To overcome this problem, a temporary connecting part 27is proposed. Said part comprises a first part 27' fixed to the second end 13", 14" having a protruding counterpart which can make a temporary connection with a second part 27", and the second part 27" which is connected to the second part 15, 16 of the drive cable assembly 7, 8 further comprising a receiving part for receiving the protruding counterpart temporarily. The second part 27" can be coupled and decoupled from the first part 27'. When the first 27' and second part 27" are coupled , the temporary connecting part 27 can transfer the driving forces supplied by the motor 6. The coupling between first and second part is a clamping coupling. The first part 27' and second part 27" are decoupled by allowing the second part 27" to be stopped from moving by a protruding part 32 adopted in the second guiding channel 17, 17' and thus that second movable element 5, 51, 52 stops moving. Protruding part 32 not only stops second part 27", but also locks it, at the same place, relative to the second guiding channel 17, 17'. Once first and second part 27',27" are decoupled, it is necessary to lock second part 27" in place, in order to couple said first and second part again. The first part 27' of the temporary connecting part 27 will be moved further under influence of the motor force, and will be decoupled from the second part 27" of the temporary connecting part 27. First part 27' is capable of transferring push and pull forces, this is possible due to the fact that the coupling and decoupling force between first part 27'and second part 27" is higher than the normal force required for moving either of the moving elements 4, 5, 24, 41, 42, 51, 52. The coupling and decoupling force, to couple and decouple the first and second part from each other, lies within the maximum force the motor 6 can exert. For connecting the first and second part of the temporary connecting part 27 the procedure is done in a reverse manner. It will be clear that with this temporary connecting part 27 as part of the drive cable assemblies 7, 8 it will be possible to drive both movable elements 4, 5, 41, 51, 42, 52 from one extreme position to another extreme position, still using one motor

Figs. 9 and 10 refer to alternative embodiments of lateral openings 20, 20' in the first and second guiding channel 9, 9', 10, 10', 17, 17'. In Fig. 9 it is shown that the lateral openings 20, 20' in first and second guiding channels 9, 9', 10, 10', 17, 17' are facing away from each other, such that the connecting part 19, forms a bridge shape, connecting the first and second part 13, 14, 15, 16 of the drive cable assembly. Also it can be conceived that in Fig. 10 the lateral openings 20, 20' in the first and second guiding channel 9, 9', 10, 10', 17, 17' is a joint opening facing in another direction, for instance in a downward direction or upward direction.

In the embodiment of Fig. 11 and 14 the first movable element 4 is a closure means, and the second movable element 51 is a windable sunscreen. In Fig. 11, the closure means 4 is driven by a moving mechanism 25, 25' which, when the closure means moves to another position, slides in guiding channels in the guide 11, 11'. Such a closure means and mechanism are known per se. In Fig. 11 the mechanism 25, 25' is connected to the second part 15, 16 of the drive cable assembly 7, 8. The advantage of such connection is that the attachment point of the mechanism 25, 25' to the second part 15, 16, may slide, seen in a longitudinal direction, close to the rear of the opening, or even rear of the opening of the closure means 4, such that closure means 4 may slide more to the rear, which results in a larger opening.

In Fig. 12 an open roof system is drawn in a schematic way, whereby the first and second movable elements 4, 5 are closure means. The closure means close the roof opening in the first, deployed position, and may slide towards each other, and may be stacked on top of each other, in a central area of the open roof system in a retracted position, as is shown in Fig. 12.

In Fig. 13 an open roof system is shown, whereby the first and second movable elements 42, 52 are stackable sunshades. The stackable sunshades close the opening beneath the roof opening and the closure means in a first, deployed position, and may slide towards each other and be stacked or be adjacent towards each other in a central area of the open roof system, in a retracted position, shown in Fig. 13.

Further in Fig. 15 an open roof system is drawn in a schematic way, whereby the first movable element 4 is a closure means, and the second movable element is a slide 24, 24' that moves a wind deflector means 28. In this embodiment the first and second movable elements 4, 24, 24' are connected both to the second part 15, 16 of the drive cable assembly 7, 8. Such wind deflector means 28 is known per se, it comprises a wind deflector body pivotally attached to the lateral guides 11, 12, and being capable of pivoting around a pivot point from a position, in which it is retracted below the closure means, to an position in which it is deployed above the roof opening. The wind defector body further comprises a laterally protruding pin, for the engagement with the wind deflector slide 24, 24'. The wind deflector means 28 further comprises said slide 24, 24', which is slidably guided in the lateral guides 11, 12. Said slide comprises a track for engagement with the pin on the wind deflector body. Moving the slide 24, 24' backwards in the guiding channel by moving second part 15, 16 of drive cable assembly 7, 8, the wind deflector body moves from a retracted position to a deployed position, as drawn in Fig. 15. The closure means 4 is connected to a moving mechanism 25, 25' and known per se, as described before. Furthermore to allow the second part 15, 16 of the drive cable assembly 7, 8 to adjust the second movable part 24 and the first movable part 4 at the same time, a temporary connecting part 27 is provided. It temporarily connects the second part 15, 16 of drive cable assembly 7, 8 to the wind deflector slide 24, 24'. It will be decoupled from said wind deflector slide 24, 24' when the wind deflector body is in its deployed position. This is necessary because the length of the cable travel to raise the wind deflector body in a deployed position, is shorter than the length of the cable travel necessary to open the closure means.

From the foregoing it will be clear that the invention provides an open roof system which has a solution for driving at least two movable elements which is cost effective and technically favorable.

The invention is not limited to the embodiments shown in the drawing and described herein before, which may be varied in different manners within the scope of the invention, as defined by the appended claims. Aspects of different embodiments may be used in other combinations.

## Claims

1. Open roof system for a vehicle having an opening (1) in its fixed roof (2), comprising a stationary part (3) to be fixed to the roof (2), at least first and second movable elements (4,5;24;41,42;51,52), which are each movable between a position in which it is retracted, and a position in which it is deployed, a motor (6) for driving the movable elements (4,5;24;41,42;51,52) at least partly between the two positions, at least two drive cable assemblies (7,8) for transferring the torque of the motor (6) to said movable elements (4,5;24;41,42;51,52), whereby the stationary part (3) comprises at least first and second guiding channels (9,9',10,10';17,17') and laterally positioned guides (11,11') for respectively guiding the drive cable assemblies (7,8) and the movable elements (4,5;24;41,42;51,52), whereby the drive cable assemblies (7,8) comprise a flexible first part (13,14) having first and second ends (13',14';13",14"), said first part (13,14) being driven by the motor (6), and whereby said first end (13',14') of said flexible first part (13,14) is connected to the first movable element (4,24,41,42), in a first direction, and said second end (13",14") is guided in a first guiding channel (9,9',10,10') in the lateral guide (11,11'), said second end (13",14") oriented in a direction substantially parallel to the first end (13',14') towards said first movable element (4,24,41,42),
**characterized in that** the drive cable assembly (7,8) further comprises an elongated second part (15,16), which is either continuously immovably connected to the flexible first part (13,14), or is temporarily connected to the flexible first part (13,14) by a temporary connecting part (27), the elongated second part (15,16) being guided in a second guiding channel (17,17') in a second direction towards said second movable element (5,51,52) and connected thereto, **in that** the second guiding channel (17,17') is oriented substantially parallel to the first guiding channel (9,9',10,10') in the lateral guide (11,11'), and **in that**, during at least part of the operation, said elongated second part (15,16) moves substantially in the same direction as the second end (13",14") of the first part (13,14) of the cable assembly (7,8) .

2. The open roof system according to claim 1, wherein in the case the second part (15,16) is continuously immovably connected to the flexible first part (13,14) the elongated second part (15,16) of the drive cable assembly (7,8) is separate from the first |part (13, 14).

3. The open roof system according to claim 2, wherein the first and second parts (13,14;15,16) are connected by a separate connecting part (19).

4. The open roof system according to claim 1, wherein in the case the second part (15,16) is continuously immovably connected to the flexible first part (13,14) the elongated second part (15,16) of the drive cable assembly (7,8) is an extension of the flexible first part (13,14).

5. The open roof system according to claim 4, wherein the elongated second part (15,16) is delimited from the first part by a small radius bend (26) in the drive cable assembly (7,8).

6. The open roof system according to claim 1, wherein in the case the second part (15,16) is temporarily connected to the flexible first part (13,14), by a temporary connecting part (27), the connection is such that during a movement between two positions of the first movable element (4,24,41,42), the second elongated part (15,16) is disconnected from the flexible first part (13,14), such that the second moveable element (5,51,52) stops moving.

7. The open roof system according to any one of the preceding claims, wherein the elongated second part (15,16) is a flexible part having the same properties as the flexible first part (13,14).

8. The open roof system according to claim 2, 3 or 6, wherein the elongated second part (15,16) is a substantially stiff part, made of plastic material or metal alloy.

9. The open roof system according to claim 3 , wherein the first and second guiding channels (9,9'10,10';17,17') in the lateral guide have lateral openings (20,20') extending along the length of the guide (11,11'), whereby the lateral openings (20,20') are facing each other, and wherein the, connecting part (19) projects through said openings.

10. The open roof system according claims 4 or 5, wherein the first and second guiding channels (9,9'10,10';17,17') in the lateral guide have lateral openings (20,20') extending along the length of the guide (11,11'), whereby the lateral openings (20,20') are facing each other, and wherein either one of the first, and second part (13,14;15,16) projects through said openings.

11. The open roof system according claim 6 , wherein the first and second guiding channels (9,9'10,10';17,17') in the lateral guide (11,11') have lateral openings (20,20') extending along the length of the guide, whereby the lateral openings (20,20') are facing each other, and wherein the temporary connecting part (27) projects through said openings.

12. The open roof system according claim 3, wherein the first and second guiding channel (9,9'10,10';17,17') in the lateral guide (11,11') have lateral openings (20,20') extending along the length of the guide, whereby the lateral openings (20,20') are facing away from each other, and wherein the connecting part (19), projects through said openings (20,20').

13. The open roof system according to any of the preceding claims, wherein the at least first and second movable elements (41,51;42,52) are windable sunscreens or stackable sunscreens.

14. The open roof system according to any of claims 1 - 12, wherein the at least first and second movable elements (,5) are closure means for closing of the opening in the fixed roof of the panel.

15. The open roof system according to any of claims 1 - 14, wherein the at least first and second movable elements are the closure means (4,5) and a slide (24,24') for raising a wind deflector means (28) for deflecting the wind when the closure means is in the open position.

16. The open roof system according to claim 8, wherein the elongated second part is connected to a mechanism (25,25') for the movement of the first or second movable element(4,5).

17. The open roof system according to any of the preceding claims, wherein the motor (6) is positioned substantially in between the first and the second movable element (4,5;24;41,42; 51,52).

18. The open roof system according to any of the preceding claims, wherein the first part (13,14) of the drive cable assembly (7,8) runs from one lateral guide (11) to the opposite lateral guide (11').

## Patentansprüche

1. Offendachsystem für ein Fahrzeug, das eine Öffnung (1) in seinem festen Dach (2) aufweist, aufweisend einen stationären Teil (3), der an dem Dach (2) zu fixieren ist, wenigstens ein erstes und ein zweites bewegbares Element (4, 5; 24; 41, 42; 51, 52), welche jeweilig zwischen einer Position, in welcher es zurückgefahren ist, und einer Position, in welcher es ausgefahren ist, bewegbar sind, einen Motor (6) zum Verfahren der bewegbaren Elemente (4, 5; 24; 41, 42; 51, 52) wenigstens teilweise zwischen den zwei Positionen, wenigstens zwei Antriebsseileinrichtungen (7, 8) zum Übertragen des Drehmoments des Motors (6) auf die bewegbaren Elemente (4, 5; 24; 41, 42; 51, 52), wobei der stationäre Teil (3) wenigstens einen ersten und einen zweiten Führungskanal (9, 9'; 10, 10'; 17, 17') und lateral angeordnete Führungen (11, 11') zum jeweiligen Führen der Antriebsseileinrichtungen (7, 8) und der bewegbaren Elemente (4, 5; 24; 41, 42; 51, 52) aufweist, wobei die Antriebsseileinrichtungen (7, 8) einen flexiblen, ersten Teil (13, 14), der ein erstes und ein zweites Ende (13', 14'; 13", 14") aufweist, aufweisen, wobei der erste Teil (13, 14) mittels des Motors (6) angetrieben wird, und wobei das erste Ende (13', 14') des flexiblen, ersten Teils (13, 14) in einer ersten Richtung mit dem ersten bewegbaren Element (4, 24, 41, 42) verbunden ist und das zweite Ende (13", 14") in einem ersten Führungskanal (9, 9'; 10, 10') in der lateralen Führung (11, 11') geführt ist, wobei das zweite Ende (13", 14") in eine Richtung, die im Wesentlichen parallel zum ersten Ende (13', 14') ist, hin zum ersten bewegbaren Element (4, 24, 41, 42) ausgerichtet ist,
**gekennzeichnet dadurch, dass** die Antriebsseileinrichtung (7, 8) ferner einen langgestreckten, zweiten Teil (15, 16) aufweist, welcher entweder mit dem flexiblen, ersten Teil (13, 14) kontinuierlich unbeweglich verbunden ist oder temporär mit dem flexiblen, ersten Teil (13, 14) mittels eines temporären Verbindungsteils (27) verbunden ist, wobei der langgestreckte, zweite Teil (15, 16) in einem zweiten Führungskanal (17, 17') in einer zweiten Richtung hin zum zweiten bewegbaren Element (5, 51, 52) geführt ist und damit verbunden ist, dadurch, dass der zweite Führungskanal (17, 17') im Wesentlichen parallel zum ersten Führungskanal (9, 9', 10, 10') in der lateralen Führung (11, 11') ausgerichtet ist, und dadurch, dass bei wenigsten einem Teil des Betriebs, der langgestreckte, zweite Teil (15, 16) sich im Wesentlichen in die gleiche Richtung wie das zweite Ende (13", 14") des ersten Teils (13, 14) der Antriebsseileinrichtung (7, 8) bewegt.

2. Das Offendachsystem gemäß Anspruch 1, wobei in dem Fall, dass der zweite Teil (15, 16) mit dem flexiblen, ersten Teil (13, 14) kontinuierlich unbeweglich verbunden ist, der zweite Teil (15, 16) der Antriebsseileinrichtung (7, 8) separat von dem ersten Teil (13, 14) ist.

3. Das Offendachsystem gemäß Anspruch 2, wobei der erste und der zweite Teil (13, 14; 15, 16) mittels eines separaten Verbindungsteils (19) verbunden sind.

4. Das Offendachsystem gemäß Anspruch 1, wobei in dem Fall, dass der zweite Teil (15, 16) mit dem flexiblen, ersten Teil (13, 14) kontinuierlich unbeweglich verbunden ist, der langgestreckte, zweite Teil (15, 16) der Antriebsseileinrichtung (7, 8) ein Fortsatz des flexiblen, ersten Teils (13, 14) ist.

5. Das Offendachsystem gemäß Anspruch 4, wobei der langgestreckte, zweite Teil (15, 16) von dem ersten Teil durch eine Kleiner-Radius-Biegung (26) in der Antriebsseileinrichtung (7, 8) abgegrenzt ist.

6. Das Offendachsystem gemäß Anspruch 1, wobei in dem Fall, dass der zweite Teil (15, 16) mit dem flexiblen, ersten Teil (13, 14) mittels eines temporären Verbindungsteils (27) temporär verbunden ist, die Verbindung derart ist, dass bei einer Bewegung zwischen zwei Positionen des ersten bewegbaren Elements (4, 24, 41, 52) der zweite, langgestreckte Teil (15, 16) von dem flexiblen, ersten Teil (13, 14) gelöst wird, so dass das zweite bewegbare Element (5, 51, 52) aufhört, sich zu bewegen.

7. Das Offendachsystem gemäß irgendeinem der vorhergehenden Ansprüche, wobei der langgestreckte, zweite Teil (15, 16) ein flexibler Teil mit denselben Eigenschaften wie der flexible, erste Teil (13, 14) ist.

8. Das Offendachsystem gemäß Anspruch 2, 3 oder 6, wobei der langgestreckte, zweite Teil (15, 16) ein im Wesentlichen steifer Teil ist, der aus einem Kunststoffmaterial oder einer Metalllegierung gefertigt ist.

9. Das Offendachsystem gemäß Anspruch 3, wobei der erste und der zweite Führungskanal (9, 9', 10, 10'; 17, 17') in der lateralen Führung laterale Öffnungen (20, 20'), die sich entlang der Länge der Führung (11, 11') erstrecken, wobei die lateralen Öffnungen (20, 20') einander zugewandt sind, aufweisen, und wobei das Verbindungsteil (19) durch die Öffnungen ragt.

10. Das Offendachsystem gemäß Anspruch 4 oder 5, wobei der erste und der zweite Führungskanal (9, 9', 10, 10'; 17, 17') in der lateralen Führung laterale Öffnungen (20, 20'), die sich entlang der Länge der Führung (11, 11') erstrecken, wobei die lateralen Öffnungen (20, 20') einander zugewandt sind, aufweisen, und wobei einer von dem ersten und dem zweiten Teil (13, 14; 15, 16) durch die Öffnungen ragt.

11. Das Offendachsystem gemäß Anspruch 6, wobei der erste und der zweite Führungskanal (9, 9', 10, 10'; 17, 17') in der lateralen Führung (11, 11') laterale Öffnungen (20, 20'), die sich entlang der Länge der Führung erstrecken, wobei die lateralen Öffnungen (20, 20') einander zugewandt sind, aufweisen, und wobei das temporäre Verbindungsstück (27) durch die Öffnungen ragt.

12. Das Offendachsystem gemäß Anspruch 3, wobei der erste und der zweite Führungskanal (9, 9', 10, 10'; 17, 17') in der lateralen Führung (11, 11') laterale Öffnungen (20, 20'), die sich entlang der Länge der Führung erstrecken, wobei die lateralen Öffnungen (20, 20') voneinander abgewandt sind, aufweisen, und wobei das Verbindungsteil (19) durch die Öffnungen (20, 20') ragt.

13. Das Offendachsystem gemäß irgendeinem der vorhergehenden Ansprüche, wobei das wenigstens erste und zweite bewegbare Element (41, 51; 42, 52) wickelbare Sonnenschutzeinrichtungen oder stapelbare Sonnenschutzeinrichtungen sind.

14. Das Offendachsystem gemäß irgendeinem der Ansprüche 1 bis 12, wobei das wenigstens erste und zweite bewegbare Element (,5) Schließmittel zum Verschließen der Öffnung in dem festen Dach des Paneels sind.

15. Das Offendachsystem gemäß irgendeinem der Ansprüche 1 bis 14, wobei das wenigstens erste und zweite bewegbare Element das Schließmittel (4, 5) und ein Schlitten (24, 24') zum Aufrichten eines Windabweisermittels (28) zum Abweisen des Winds, wenn das Schließmittel in der Offen-Position ist, sind.

16. Das Offendachsystem gemäß Anspruch 8, wobei der langgestreckte, zweite Teil mit einem Mechanismus (25, 25') zur Bewegung des ersten oder des zweiten bewegbaren Elements (4, 5) verbunden ist.

17. Das Offendachsystem gemäß irgendeinem der vorhergehenden Ansprüche, wobei der Motor (6) im Wesentlichen zwischen dem ersten und dem zweiten bewegbaren Element (4,5; 24; 41, 42; 51, 52) angeordnet ist.

18. Das Offendachsystem gemäß irgendeinem der vorhergehenden Ansprüche, wobei der erste Teil (13, 14) der Antriebsseileinrichtung (7, 8) von einer lateralen Führung (11) zur entgegengesetzten lateralen Führung (11') verläuft.

## Revendications

1. Système de toit ouvrant pour un véhicule ayant une ouverture (1) dans son toit fixe (2), comprenant une partie immobile (3) à fixer au toit (2), au moins des premier et second éléments mobiles (4, 5 ; 24 ; 41, 42 ; 51, 52), qui sont chacun mobiles entre une position dans laquelle ils sont rétractés, et une position dans laquelle ils sont déployés, un moteur (6) pour entraîner les éléments mobiles (4, 5 ; 24 ; 41, 42 ; 51, 52) au moins en partie entre les deux positions, au moins deux ensembles de câble d'entraînement (7, 8) pour transférer le couple du moteur (6) auxdits éléments mobiles (4, 5 ; 24 ; 41, 42 ; 51, 52), moyennant quoi la partie immobile (3) comprend au moins des premier et second canaux de guidage (9, 9', 10, 10' ; 17, 17') et des guides positionnés latéralement (11, 11') pour guider respectivement les ensembles de câble d'entraînement (7, 8) et les éléments mobiles (4, 5 ; 24 ; 41, 42 ; 51, 52), moyennant quoi les ensembles de câble d'entraînement (7, 8) comprennent une première partie flexible (13, 14) ayant des première et seconde extrémités (13', 14' ; 13 ", 14 "), ladite première partie (13, 14) étant entraînée par le moteur (6), et moyennant quoi ladite première extrémité (13', 14') de ladite première partie flexible (13, 14) est raccordée au premier élément mobile (4, 24, 41, 42), dans une première direction, et ladite seconde extrémité (13 ", 14 ") est guidée dans un premier canal de guidage (9, 9', 10, 10') dans le guide latéral (11, 11'), ladite seconde extrémité (13", 14") orientée dans une direction sensiblement parallèle à la première extrémité (13', 14') vers ledit premier élément mobile (4, 24, 41, 42),
**caractérisé en ce que** l'ensemble de câble d'entraînement (7, 8) comprend en outre une seconde partie allongée (15, 16), qui est soit raccordée fixement en continu à la première partie flexible (13, 14), soit raccordée temporairement à la première partie flexible (13, 14) par une partie de raccordement temporaire (27), la seconde partie allongée (15, 16) étant guidée dans un second canal de guidage (17, 17') dans une seconde direction vers ledit second élément mobile (5, 51, 52) et raccordée à celui-ci, **en ce que** le second canal de guidage (17, 17') est orienté sensiblement parallèle au premier canal de guidage (9, 9', 10, 10') dans le guide latéral (11, 11'), et **en ce que**, pendant au moins une partie de l'opération, ladite seconde partie allongée (15, 16) se déplace sensiblement dans la même direction que la seconde extrémité (13", 14") de la première partie (13, 14) de l'ensemble de câble (7, 8).

2. Système de toit ouvrant selon la revendication 1, dans lequel dans le cas où la seconde partie (15, 16) est raccordée fixement en continu à la première partie flexible (13, 14), la seconde partie allongée (15, 16) de l'ensemble de câble d'entraînement (7, 8) est séparée de la première partie (13, 14).

3. Système de toit ouvrant selon la revendication 2, dans lequel les première et seconde parties (13, 14 ; 15, 16) sont raccordées par une partie de raccordement séparée (19).

4. Système de toit ouvrant selon la revendication 1, dans lequel dans le cas où la seconde partie (15, 16) est raccordée fixement en continu à la première partie flexible (13, 14), la seconde partie allongée (15, 16) de l'ensemble de câble d'entraînement (7, 8) est un prolongement de la première partie flexible (13, 14).

5. Système de toit ouvrant selon la revendication 4, dans lequel la seconde partie allongée (15, 16) est délimitée de la première partie par un coude de petit rayon (26) dans l'ensemble de câble d'entraînement (7, 8).

6. Système de toit ouvrant selon la revendication 1, dans lequel dans le cas où la seconde partie (15, 16) est raccordée temporairement à la première partie flexible (13, 14), par une partie de raccordement temporaire (27), le raccordement est tel que pendant un déplacement entre deux positions du premier élément mobile (4, 24, 41, 42), la seconde partie allongée (15, 16) est débranchée de la première partie flexible (13, 14), de sorte que le second élément mobile (5, 51, 52) arrête de se déplacer.

7. Système de toit ouvrant selon l'une quelconque des revendications précédentes, dans lequel la seconde partie allongée (15, 16) est une partie flexible ayant les mêmes propriétés que la première partie flexible (13, 14).

8. Système de toit ouvrant selon la revendication 2, 3 ou 6, dans lequel la seconde partie allongée (15, 16) est une partie sensiblement raide, réalisée en matériau plastique ou en alliage de métal.

9. Système de toit ouvrant selon la revendication 3, dans lequel les premier et second canaux de guidage (9, 9', 10, 10' ; 17, 17') dans le guide latéral ont des ouvertures latérales (20, 20') s'étendant suivant la longueur du guide (11, 11'), moyennant quoi les ouvertures latérales (20, 20') se font face l'une à l'autre, et dans lequel la partie de raccordement (19) fait saillie à travers lesdites ouvertures.

10. Système de toit ouvrant selon les revendications 4 ou 5, dans lequel les premier et second canaux de guidage (9, 9', 10, 10' ; 17, 17') dans le guide latéral ont des ouvertures latérales (20, 20') s'étendant suivant la longueur du guide (11, 11'), moyennant quoi les ouvertures latérales (20, 20') se font face l'une à l'autre, et dans lequel l'une ou l'autre de la première et de la seconde partie (13, 14 ; 15, 16) fait saillie à travers lesdites ouvertures.

11. Système de toit ouvrant selon la revendication 6, dans lequel les premier et second canaux de guidage (9, 9', 10, 10' ; 17, 17') dans le guide latéral (11, 11') ont des ouvertures latérales (20, 20') s'étendant suivant la longueur du guide, moyennant quoi les ouvertures latérales (20, 20') se font face l'une à l'autre, et dans lequel la partie de raccordement temporaire (27) fait saillie à travers lesdites ouvertures.

12. Système de toit ouvrant selon la revendication 3, dans lequel les premier et second canaux de guidage (9, 9', 10, 10' ; 17, 17') dans le guide latéral (11, 11') ont des ouvertures latérales (20, 20') s'étendant suivant la longueur du guide, moyennant quoi les ouvertures latérales (20, 20') sont orientées à l'opposé l'une de l'autre, et dans lequel la partie de raccordement (19) fait saillie à travers lesdites ouvertures (20, 20').

13. Système de toit ouvrant selon l'une quelconque des revendications précédentes, dans lequel les au moins premier et second éléments mobiles (41, 51 ; 42, 52) sont des pare-soleil enroulables ou des pare-soleil empilables.

14. Système de toit ouvrant selon l'une quelconque des revendications 1 à 12, dans lequel les au moins premier et second éléments mobiles (5) sont des moyens de fermeture pour fermer l'ouverture dans le toit fixe du panneau.

15. Système de toit ouvrant selon l'une quelconque des revendications 1 à 14, dans lequel les au moins premier et second éléments mobiles sont les moyens de fermeture (4, 5) et une glissière (24, 24') pour relever un moyen de déflecteur de vent (28) pour dévier le vent lorsque le moyen de fermeture est dans la position ouverte.

16. Système de toit ouvrant selon la revendication 8, dans lequel la seconde partie allongée est raccordée à un mécanisme (25, 25') pour déplacer le premier ou second élément mobile (4, 5).

17. Système de toit ouvrant selon l'une quelconque des revendications précédentes, dans lequel le moteur (6) est positionné sensiblement entre le premier et le second élément mobile (4, 5 ; 24 ; 41, 42 ; 51, 52).

18. Système de toit ouvrant selon l'une quelconque des revendications précédentes, dans lequel la première partie (13, 14) de l'ensemble de câble d'entraînement (7, 8) s'étend d'un guide latéral (11) au guide latéral opposé (11').
